# EUROPEAN PATENT APPLICATION

(11) **EP 2 735 738 A2**
(43) Date of publication of application: **28.05.2014**
(21) Application number: 13156577.2
(22) Date of filing: 25.02.2013
(51) Int. Cl.: F04B 33/00

(54) **Bicycle air pump apparatus**

(30) Priority: 23.11.2012 TW 101222813
(71) Applicant: Galaxy Global Inc., Taichung City 435 (TW)
(72) Inventor: Chun-Hua, Wang, 435 Taichung City (TW)
(74) Representative: Becker Kurig Straus

(57) **Abstract**

A bicycle air pump apparatus (10) includes a floor base (20) for the parking of one bicycle wheel (52) of a bicycle (50) and defining an accommodation open chamber (24) for receiving a part of the bicycle wheel, an air pump (30) affixed to the floor base for pumping air, and a support unit (40) extended from the air pump and defining a top surface (423), a front surface (421) and a notch (424) recessed from the top surface and opened on the front surface for supporting the wheel axle (522) of the bicycle wheel. Thus, the bicycle air pump apparatus provides a tire pumping function as well as a bicycle parking function, and is equipped with a support unit for supporting the parked bicycle steadily in the standing position.

## Description

### BACKGROUND OF THE INVENTION

### 1. Field of the Invention

The present invention relates to bicycle accessories and more particularly, to a bicycle air pump apparatus.

### 2. Description of the Related Art

There are many commercial bicycle air pumps designed to be placed at home for the user or carried with the user's bicycle for inflating the tires of the user's bicycle when the tire pressure of the bicycle's tires is low, ensuring riding safety and preventing flat tires.

There are bicycle stand type air pumps commercially available. Taiwan Utility Patent M364773 discloses an air pump with a bicycle parking function. Taiwan Publication Patent 200833949 discloses an air pump capable of suspending the rear wheel of a bicycle. These prior art designs provide a tire pumping function as well as a bicycle parking function.

However, during the operation of the bicycle parking function of aforesaid prior art designs, the bicycle frame is supported on the air pump and the rear wheel of the bicycle is lifted from the floor. This supporting method makes the bicycle stand less stably. An improvement in this regard is necessary.

### SUMMARY OF THE INVENTION

The present invention has been accomplished under the circumstances in view. It is the main object of the present invention to provide a bicycle air pump apparatus, which provides a tire pumping function as well as a bicycle parking function, and is equipped with a support unit for supporting the parked bicycle steadily in the standing position.

To achieve the above objects of the present invention, a bicycle air pump apparatus comprises a floor base, an air pump, and a support unit. The floor base is adapted for allowing a bicycle wheel to be parked thereon, comprising an accommodation open chamber for receiving a part of the bicycle wheel parked thereon. The air pump is fixedly mounted at the floor base for pumping air. The support unit is extended from the air pump, comprising a notch, a front surface and a top surface. The notch is recessed from the top surface and opened on the front surface for supporting the bicycle wheel.

Thus, the bicycle air pump apparatus allows a bicycle to be parked thereon and can pump up tires of bicycle wheels. Further, the wheel axle of the parked bicycle wheel can be positioned in the notch of the support unit steadily. The floor base can support the bicycle wheel and use the accommodation open chamber to keep the bicycle wheel in place. Thus, the parked bicycle can be kept in the standing position steadily.

Other advantages and features of the present invention will be fully understood by reference to the following specification in conjunction with the accompanying drawings, in which like reference signs denote like components of the structure.

### BRIEF DESCRIPTION OF THE DRAWINGS

FIG. 1 is an elevational assembly view of a bicycle air pump apparatus in accordance with a first embodiment of the present invention.
FIG. 2 is a schematic elevational applied view of the first embodiment of the present invention, illustrating a bicycle parked on a floor base of the bicycle air pump apparatus.
FIG. 3 is a schematic sectional applied view of the first embodiment of the present invention, illustrating the wheel axle of a bicycle wheel of the parked bicycle supported on a support unit of the bicycle air pump apparatus.
FIG. 4 is a schematic perspective view of the first embodiment of the present invention, illustrating a second support arm of the support unit of the bicycle air pump apparatus moved between an unfold operative position and a fold non-operative position.
FIG. 5 is an elevational view of a bicycle air pump apparatus in accordance with a second embodiment of the present invention.
FIG. 6 is a schematic perspective view of the second embodiment of the present invention, illustrating a second support arm of a support unit of the bicycle air pump apparatus moved between an unfold operative position and a fold non-operative position.
FIG. 7 is an elevational view of a bicycle air pump apparatus in accordance with a third embodiment of the present invention.
FIG. 8 is a sectional view of a part of the bicycle air pump apparatus in accordance with the third embodiment of the present invention.
FIG. 9 is an elevational view of a bicycle air pump apparatus in accordance with a fourth embodiment of the present invention.
FIG. 10 is a sectional view of a part of the bicycle air pump apparatus in accordance with the fourth embodiment of the present invention.

### DETAILED DESCRIPTION OF THE INVENTION

Reference will now be made in detail to embodiments of which are illustrated in the accompanying drawings, wherein like reference numerals denote like component parts throughout the specification.

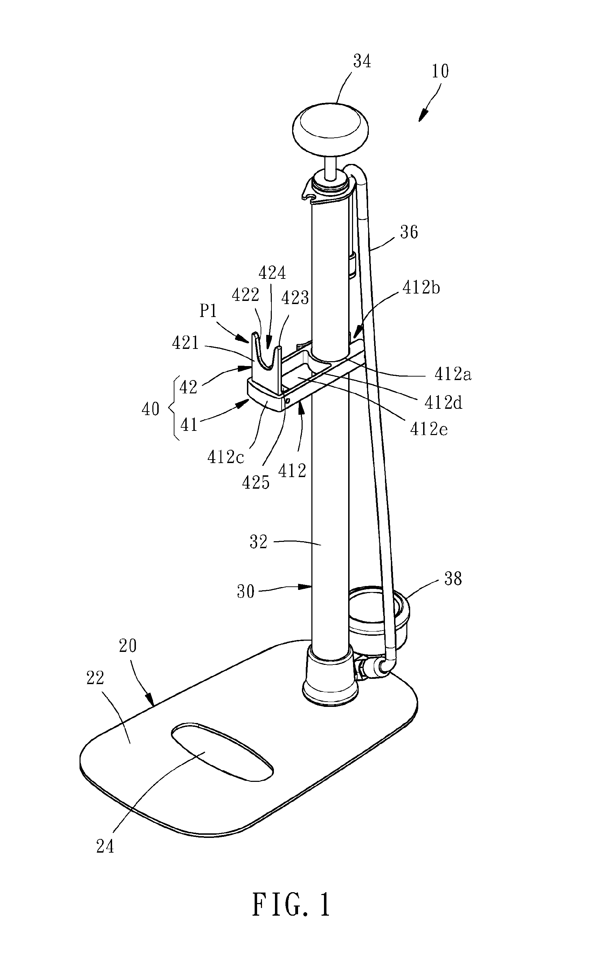

Referring to FIG. 1, a bicycle air pump apparatus in accordance with a first embodiment of the present invention is shown. The bicycle air pump apparatus **10** comprises a floor base **20,** an air pump **30,** and a support unit **40.**

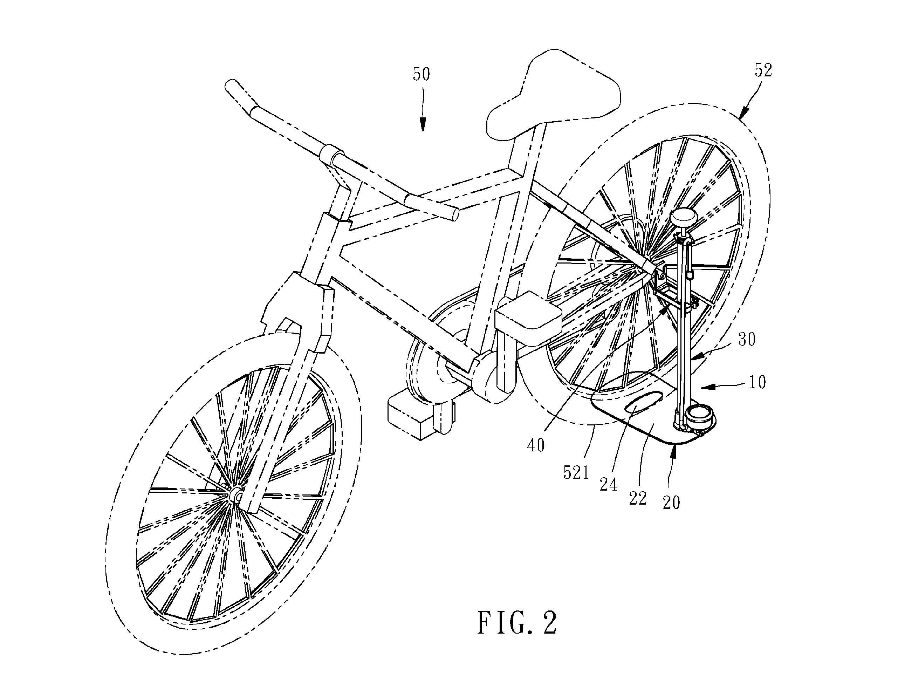

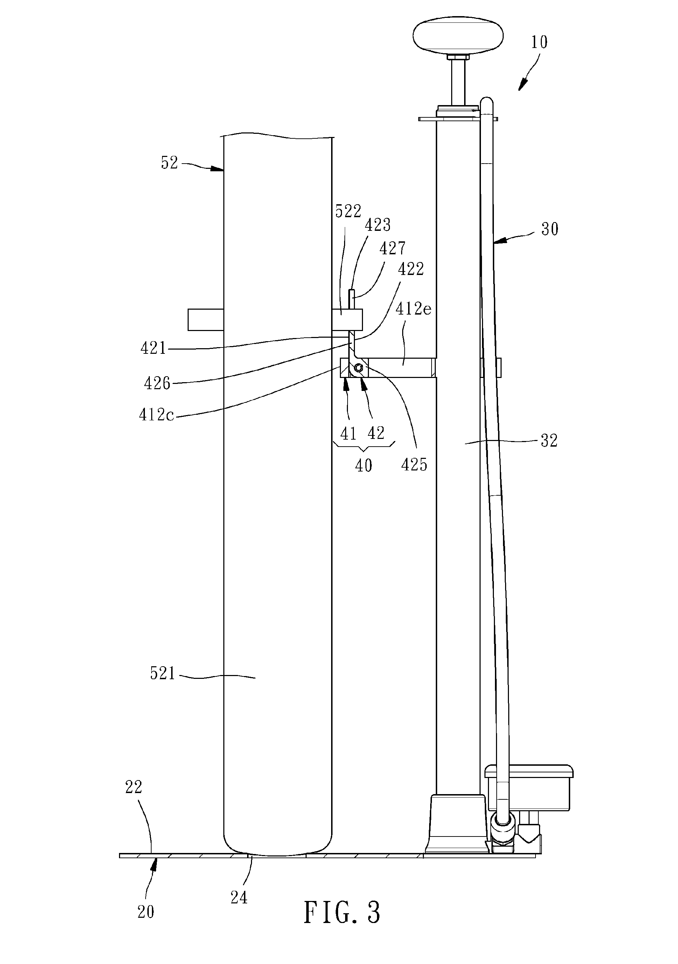

The floor base **20** defines a top surface **22,** and an accommodation open chamber **24** opened on the top surface **22.** In this embodiment, the accommodation open chamber **24** penetrates the floor base **20.** Alternatively, the accommodation open chamber **24** can be recessed from the top surface **22** without penetrating the floor base **20.** As shown in FIG. 2 and FIG. 3, the floor base **20** is configured for enabling one bicycle wheel **52** of a bicycle **50** to be parked on the top surface **22,** and the accommodation open chamber **24** is configured to receive a part of the tire **521** of the bicycle wheel **52.**

The air pump **30** is fixedly mounted at the top surface **22** of the floor base **20** at a rear side relative to the accommodation open chamber **24,** comprising a pump body **32,** a piston rod **34,** a flexible air tube **36,** and an air-pressure gage **38.** The structure and operation method of the air pump **30** are of the known art. Therefore, no further detailed description is necessary in this regard.

The support unit **40** comprises a first support arm **41** forwardly extended from the pump body **32** of the air pump **30,** and a second support arm **42** upwardly extended from the first support arm **41.** The second support arm **42** comprises a front surface **421,** a back surface **422,** a top surface **423,** and a notch **424** recessed from the top surface **423** and opened on the opposing front surface **421** and back surface **422.** When the bicycle wheel **52** is parked on the top surface **22,** the wheel axle **522** of the bicycle wheel **52** is positioned in the notch **424** (see FIG. 2 and FIG. 3).

Thus, the bicycle air pump apparatus **10** allows a bicycle to be parked thereon and can pump up tires of bicycle wheels. Further, the notch **424** of the support unit **40** and the accommodation open chamber **24** of the floor base **20** can keep the wheel axle **522** and tire **521** of the bicycle wheel **52** in position, enabling the bicycle **50** to be supported on the support unit **40** steadily. Thus, the bicycle **50** can stand vertical steadily and will not fall down easily.

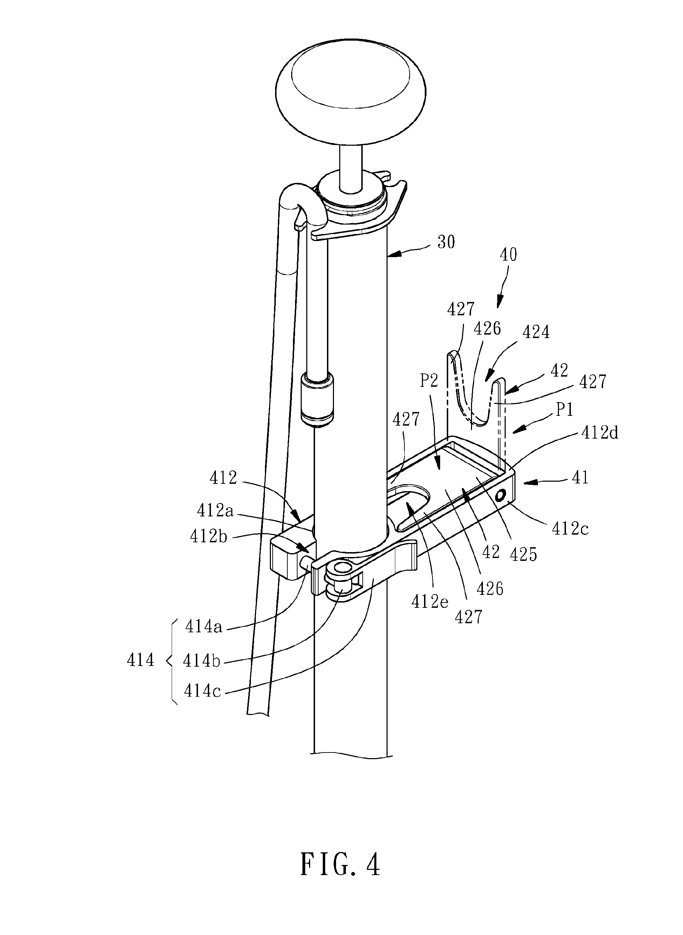

For enabling the bicycle air pump apparatus **10** to fit different sizes of bicycle wheels, the first support arm **41** of the support unit **40** is made vertically movable along the pump body **32** of the air pump **30** to change its position relative to the air pump **30.** As shown in FIG. 4, the first support arm **41** comprises an arm body **412,** and a quick release device **414.** The arm body **412** comprises a through hole **412a,** and a mouth **412b** in communication with the through hole **412a.** The air pump **30** is inserted through the through hole **412a.** The quick release device **414** comprises a stem **414a,** a pivot axle **414b** perpendicularly fixedly connected to the stem **414a,** and a cam lever **414c** coupled to the pivot axle **414b.** The stem **414a** is inserted through the arm body **412** across the mouth **412b.** The user can bias the cam lever **414c** in one direction to deform the arm body **412** elastically, thereby shortening the width of the mouth **412b** and causing the arm body **412** to be clamped on the air pump **30** tightly. The user can also bias the cam lever **414c** in the reversed direction to release the arm body **412,** allowing the arm body **412** to be moved vertically along the air pump **30.**

Further, as shown in FIG. 4, the second support arm **42** is pivotally connected to a front end portion **412c** of the first support arm **41,** and biasable relative to the first support arm **41** between an unfold operative position **P1** and a fold non-operative position **P2.** When the second support arm **42** is in the unfold operative position **P1,** it extends vertically upwardly from the first support arm **41.** At this time, the support unit **40** can achieve the aforesaid effect to support the bicycle wheel. After removal of the bicycle from bicycle air pump apparatus **10,** the user can bias the second support arm **42** backwardly from the unfold operative position **P1** to the fold non-operative position **P2** where the second support arm **42** extends from the front end portion **412c** of the first support arm **41** in direction toward the air pump **30.**

More specifically, when viewing the second support arm **42** in the unfold operative position **P1,** it is clear that the second support arm **42** comprises a pivot portion **425** pivotally connected to the first support arm **41,** a connection portion **426** upwardly extended from the pivot portion **425,** and two legs **427** upwardly extended from the connection portion **426.** The notch **424** is defined between the two legs **427.** Further, the arm body **412** of the first support arm **41** further comprises a top surface **412d,** and a receiving groove **412e** opened on the top surface **412d.** The pivot portion **425** of the second support arm **42** is received in the receiving groove **412e.** When the second support arm **42** is in the fold non-operative position **P2,** the connection portion **426** and the legs **427** are also received in the receiving groove **412e.**

It's worth mentioning that the support unit **40** of the bicycle air pump apparatus **10** mainly uses its notch **424** to support the wheel axle **522** of the bicycle wheel **52,** keeping the bicycle wheel **52** steadily in position. Therefore, the folding collapsible function of the second support arm **42** is not imperative, i.e., the second support arm **42** can be fixedly connected to the first support arm **41.** Further, the vertically movable design of the first support arm **41** for allowing its position to be changed relative to the air pump **30** is not imperative, i.e., the first support arm **41** can be affixed to the air pump **30.**

In other words, in the support unit of the bicycle air pump apparatus, the folding collapsible design of the second support arm and the vertically movable design of the first support arm are the secondary functions of the bicycle air pump apparatus. However, these two functions facilitate storage and application of the bicycle air pump apparatus. Further, achieving these two functions is not limited to the arrangement in the aforesaid first embodiment. The support units **60;70;80** described in the following, second, third and fourth embodiments of the present invention can also achieve the aforesaid two functions.

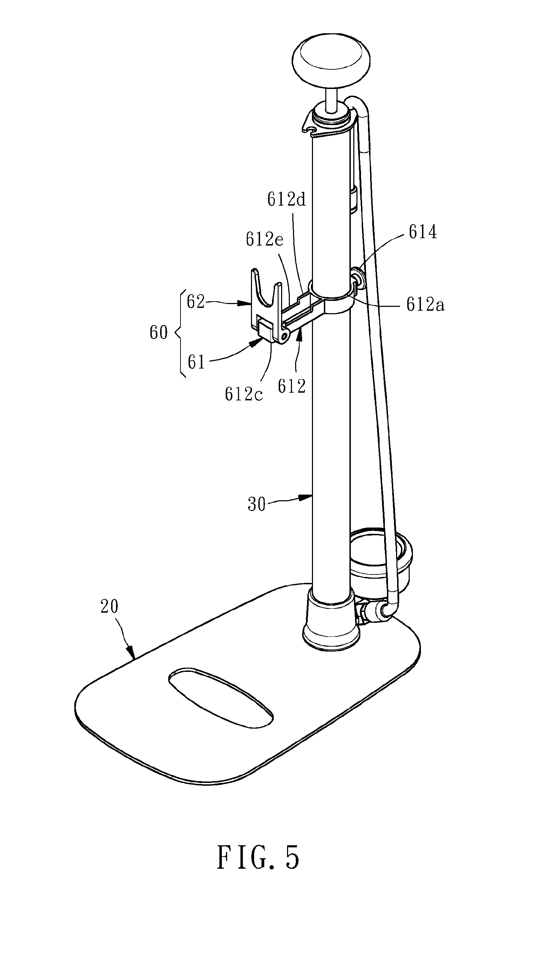

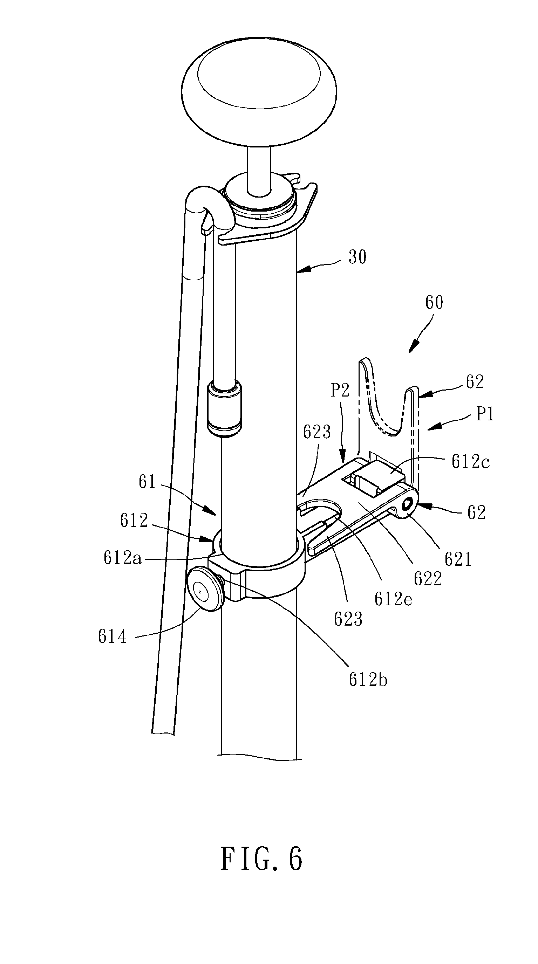

Referring to FIG. 5 and FIG. 6, the first support arm **61** of the support unit **60** in accordance with the second embodiment of the present invention comprises an arm body **612,** and a tightening up screw **614.** The arm body **612** defines a through hole **612a,** and a screw hole **612b** in communication with the through hole **612a.** The air pump **30** is inserted through the through hole **612a.** The tightening up screw **614** is threaded into the screw hole **612b** and can be stopped against the air pump **30.** When the tightening up screw **614** is loosened, the support unit **60** is unlocked and movable relative to the air pump **30** to the desired position. After adjustment, the tightening up screw **614** is fastened tight to lock the support unit **60** to the air pump **30** in the adjusted position.

The pivot portion **621** of the second support arm **62** of the support unit **60** is pivotally connected to the front end portion **612c** of the first support arm **61.** The arm body **612** of the first support arm **61** further comprises a notch **612e** recessed from the top surface **612d** between the through hole **612a** and the front end portion **612c.** At the unfold operative position **P1,** the second support arm **62** can support the wheel axle of the bicycle wheel. At the fold non-operative position **P2,** the connection portion **622** of the second support arm **62** is received in the notch **612e** of the first support arm **61,** and the two legs **623** of the second support arm **62** are respectively disposed at two opposite sides of the first support arm **61.**

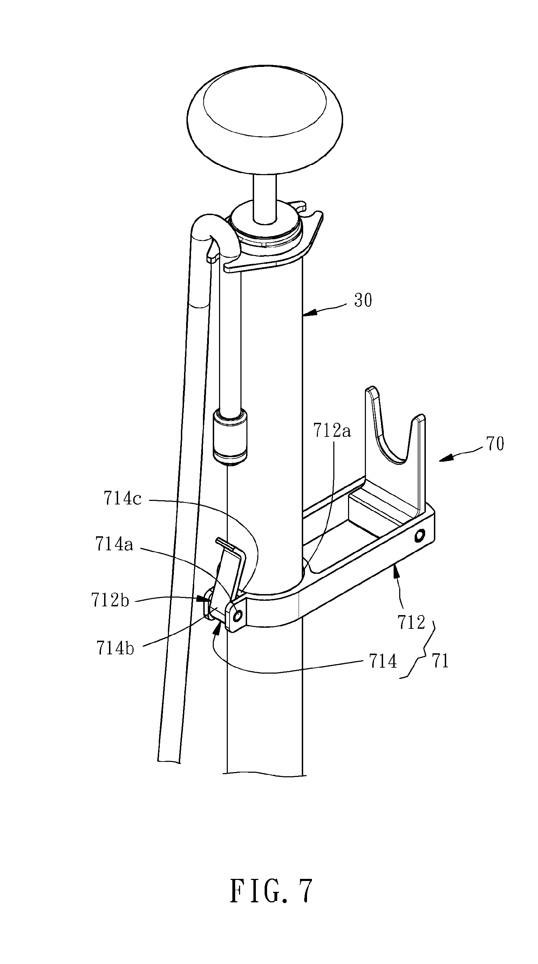

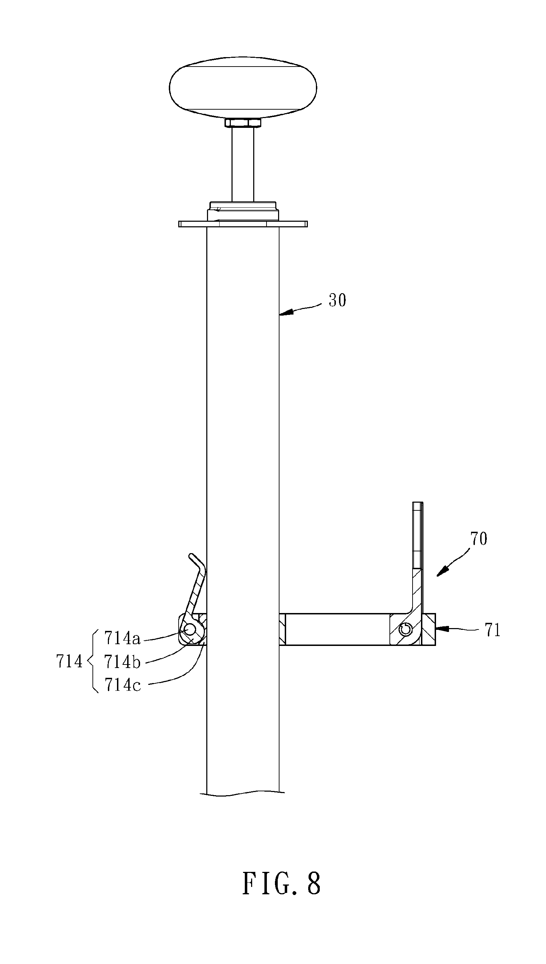

Referring to FIG. 7 and FIG. 8, the support unit **70** in accordance with the third embodiment of the present invention is substantially similar to the support unit **40** of the first embodiment with the exception of its installation in the air pump **30.**

More specifically, the first support arm **71** of the support unit **70** comprises an arm body **712,** and a quick release device **714.** The arm body **712** comprises a through hole **712a,** and a mouth **712b** in communication with the through hole **712a.** The air pump **30** is inserted through the through hole **712a.** The quick release device **714** comprises a pivot axle **714a** inserted through the arm body **712** across the mouth **712b,** a cam lever **714b** coupled to the pivot axle **714a** and received in the mouth **712b,** and a stop block **714c** received in the mouth **712b** between the cam lever **714b** and the air pump **30.** The user can bias the cam lever **714b** to a predetermined angle (the angle shown in FIG. 7 and FIG. 8) to force the stop block **714c** into operative engagement with the air pump **30,** i.e., when the cam lever **714b** is kept away from the aforesaid predetermined angle, the air pump **30** is released from the constraint of the stop block **714c.** Thus, the support unit **70** can be moved vertically relative to the air pump **30** to the desired position. It's worth mentioning that the quick release device **714** can be made without the stop block **714c** and operated to force the cam lever **714b** into operative engagement with the air pump **30.**

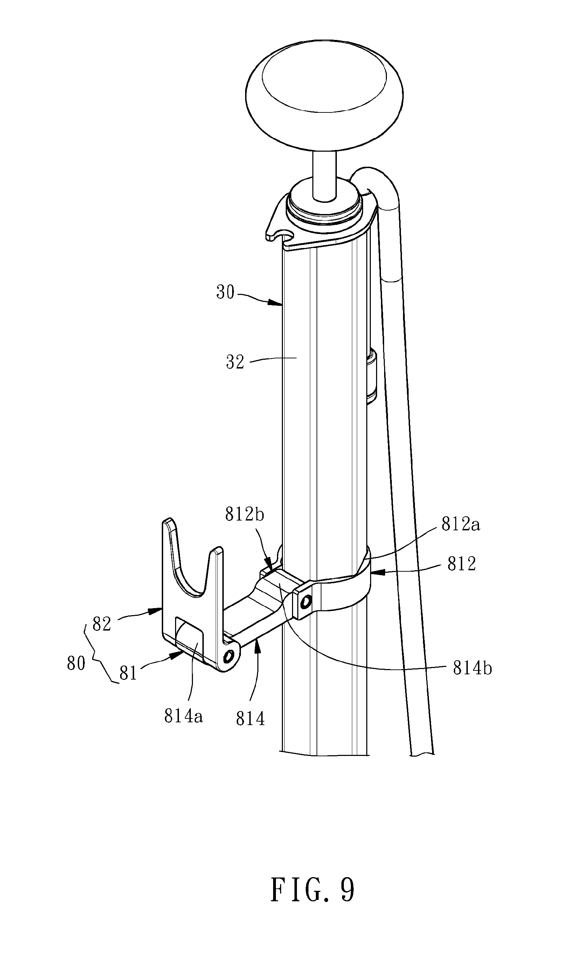

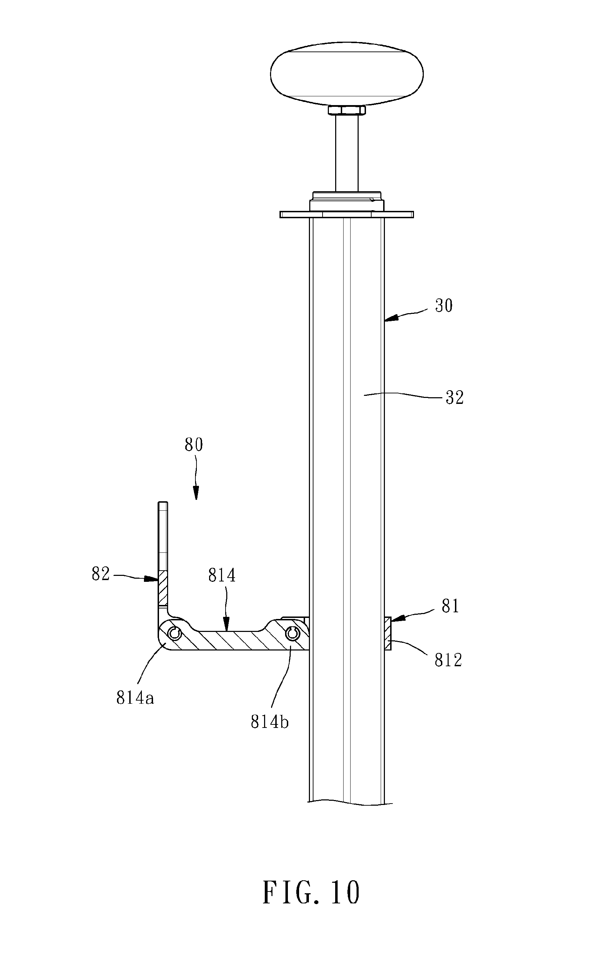

Referring to FIG. 9 and FIG. 10, the first support arm **81** of the support unit **80** in accordance with the fourth embodiment of the present invention comprises a coupling member **812** and a suspension arm **814.** The coupling member **812** defines a through hole **812a,** and a mouth **812b** in communication with the through hole **812a.** The suspension arm **814** comprises a front end portion **814a** located at its one end and connected to the second support arm **82,** and a cam portion **814b** located at its other end and rotatably disposed in the mouth **812b** of the coupling member **812.** When the cam portion **814b** is biased to a predetermined angle relative to the coupling member **812** (i.e., the angle shown in FIG. 9 and FIG. 10), it is kept in operative engagement with the air pump **30,** i.e., when the suspension arm **814** is moved away from this predetermined angle, the air pump **30** is released from the constraint of the cam portion **814b,** allowing the support unit **80** to be moved vertically to change its position relative to the air pump **30.**

It's worth mentioning that the floor base of the bicycle air pump apparatus is not limited to the flat plate design. The floor base can be variously configured to provide the accommodation open chamber for the parking of the bicycle wheel. Further, the support unit can be variously configured to extend forward from the air pump with the notch recessed from the top surface and cut through the front surface thereof, eliminating the aforesaid first and second support arms. Further, as shown in FIG. 9 and FIG. 10, the pump body **32** of the air pump **30** is not limited to a cylindrical shape. It can be shaped like a prism, or a shaped column formed of a shaped tube.

## Claims

1. A bicycle air pump apparatus (10), **characterized in that** the bicycle air pump apparatus comprises:
a floor base (20) for allowing a bicycle wheel (52) to be parked thereon, said floor base comprising an accommodation open chamber (24) for receiving a part of the bicycle wheel parked thereon;
an air pump (30) fixedly mounted at said floor base for pumping air; and
a support unit (40) extended from said air pump, said support unit comprising a notch (424), a front surface (421) and a top surface (423), said notch being recessed from said top surface and opened on said front surface for supporting said bicycle wheel.

2. The bicycle air pump apparatus as claimed in claim 1, **characterized in that** said support unit further comprises a first support arm (41) extended from said air pump, and a second support arm (42) extended from said first support arm; said notch is located at said second support arm.

3. The bicycle air pump apparatus as claimed in claim 2, **characterized in that** said second support arm is pivotally connected to a front end portion (412c) of said first support arm and biasable relative to said first support arm between an unfold operative position (P1) and a fold non-operative position (P2), said second support arm being perpendicularly extended from said front end portion of said first support arm at said unfold operative position, said second support arm being extended from said front end portion of said first support arm toward said air pump at said fold non-operative position.

4. The bicycle air pump apparatus as claimed in claim 3, **characterized in that** said second support arm comprises a pivot portion (425) pivotally connected to said first support arm, a connection portion (426) extended from said pivot portion, and two legs (427) extended from said connection portion; said notch is defined between said two legs.

5. The bicycle air pump apparatus as claimed in claim 4, **characterized in that** said first support arm comprises a top surface (412d), and a receiving groove (412e) opened on said top surface; said pivot portion of said second support arm is disposed in said receiving groove of said first support arm so that when said second support arm is in said fold non-operative position, said connection portion and said legs are received in said receiving groove.

6. The bicycle air pump apparatus as claimed in claim 4, **characterized in that** said first support arm (61) comprises a top surface (612d) and a notch (612e) recessed from said top surface; when second support arm (62) is in said fold non-operative position, said connection portion (622) is received in said notch of said first support arm and said two legs (623) are disposed at two opposite sides of said first support arm.

7. The bicycle air pump apparatus as claimed in any one of claims 2-6, **characterized in that** said first support arm is mounted at said air pump and movable along said air pump to change the position thereof relative to said air pump.

8. The bicycle air pump apparatus as claimed in claim 7, **characterized in that** said first support arm comprises an arm body (412) and a quick release device (414), said arm body comprising a through hole (412a) for the passing of said air pump and a mouth (412b) in communication with said through hole, said quick release device comprising a stem (414a) inserted through said arm body across said mount, a pivot axle (414b) fixedly and perpendicularly connected to said stem and a cam lever (414c) coupled to said pivot axle and biasable by a user to change the width of said mouth for locking said arm body to said air pump, or unlocking said arm body from said air pump for allowing said arm body to be moved along said air pump.

9. The bicycle air pump apparatus as claimed in claim 7, **characterized in that** said first support arm comprises an arm body (612) and a tightening up screw (614), said arm body comprising a through hole (612a) for the passing of said air pump and a screw hole (612b) in communication with said through hole, said tightening up screw being threaded into said screw hole and stoppable against said air pump to lock said arm body to said air pump.

10. The bicycle air pump apparatus as claimed in claim 7, **characterized in that** said first support arm (71) comprises an arm body (712) and a quick release device (714), said arm body comprising a through hole (712a) for the passing of said air pump and a mouth (712b) in communication with said through hole, said quick release device comprising a pivot axle (714a) inserted through said arm body across said mouth and a cam lever (714b) coupled to said pivot axle and biasable by the user to a predetermined angle to lock said arm body to said air pump.

11. The bicycle air pump apparatus as claimed in claim 7, **characterized in that** said first support arm (81) comprises a coupling member (812) and a suspension arm (814) connected to said second support arm (82), said coupling member comprising a through hole (812a) for the passing of said air pump and a mouth (812b) in communication with said through hole, said suspension arm comprising a cam portion (814b) disposed in said mouth and biasable by an external force to a predetermined angle to lock said first support arm to said air pump.
